# EUROPÄISCHE PATENTSCHRIFT

(11) **EP 3 497 054 B1**
(45) Veröffentlichungstag und Bekanntmachung des Hinweises auf die Patenterteilung: **28.04.2021**
(21) Anmeldenummer: 17735563.3
(22) Anmeldetag: 07.07.2017
(51) Int. Cl.: C01B 25/047

(54) **VERFAHREN ZUR REINIGUNG VON GELBEM PHOSPHOR**
METHOD FOR THE PURIFICATION OF YELLOW PHOSPHORUS
PROCEDE DE PURIFICATION DE PHOSPHORE JAUNE

(30) Priorität: 08.08.2016 EP 16183207
(43) Veröffentlichungstag der Anmeldung: 19.06.2019
(73) Patentinhaber: LANXESS Deutschland GmbH, 50569 Köln (DE)
(72) Erfinder: HANSEL, Jan-Gerd, 51469 Bergisch Gladbach (DE); JANSEN, Rolf-Michael, 51465 Bergisch Gladbach (DE); ROSENOW, Bernd, 51371 Leverkusen (DE)
(86) Internationale Anmeldenummer: PCT/EP2017/067111
(87) Internationale Veröffentlichungsnummer: WO 2018/028905

(56) Entgegenhaltungen:
- DE-A1- 2 135 546
- DE-B- 1 143 794

## Beschreibung

Die vorliegende Erfindung betrifft ein Verfahren zu Reinigung von gelbem unreinem Phosphor durch Adsorption an Aktivkohle.

Elementarer Phosphor wird technisch durch Reduktion von Phosphaterz mit Koks im elektrothermischen Ofen hergestellt. Die dabei erhaltene Phosphormodifikation ist der sogenannte weiße Phosphor oder Tetraphosphor der Formel P₄, ein in reiner Form fast farbloser Feststoff mit dem Schmelzpunkt 44 °C. Das technische Produkt ist jedoch typischer Weise gelb oder braun gefärbt und kommt daher unter der Bezeichnung "gelber Phosphor" in den Handel. Im Sinne der vorliegenden Erfindung wird im Folgenden mit dem Begriff "Phosphor" ausschließlich Tetraphosphor der Formel P₄ bezeichnet.

Die gelbe Farbe des gelben Phosphors rührt von Verunreinigungen her. Nach DE 11 43 794 A1 kann es sich bei den Verunreinigungen um anorganische Bestandteile und um organische Verbindungen handeln. Da sie bei der Verarbeitung des Phosphors zu Folgeprodukten stören, sind aus der Literatur bereits zahlreiche Verfahren zur Reinigung von gelbem Phosphor bekannt geworden.

Zur Abtrennung der Verunreinigung des gelben Phosphors durch organische Verbindungen wurden beispielsweise in DE 11 43 794 A1, DE 21 35 546 A1, US 5,283,042 und DE 42 03 011 A1 Verfahren zur Reinigung durch Adsorption an Aktivkohle beschrieben. Diese Reinigungsverfahren weisen jedoch Nachteile auf.

So wird nach dem Verfahren aus DE 11 43 794 A1 der gelbe Phosphor in Form einer Schmelze zunächst mit Polyphosphorsäure gewaschen und dann durch Behandlung mit Aktivkohle weiter gereinigt. Der Phosphor muss vor der Aktivkohlebehandlung jedoch von anhaftendem Wasser befreit werden. Das bedeutet einen zusätzlichen Aufwand, da gelber Phosphor in der Technik stets unter einer Deckschicht von Wasser ("Deckwasser") gehandhabt wird, um ihn vor Luftkontakt zu schützen. Weiterhin ist es nach DE 11 43 794 A1 erforderlich, zusätzlich zur Aktivkohle eine Bleicherde einzusetzen. Die Polyphosphorsäurewäsche, die Befreiung von Wasser und der Bleicherdeeinsatz machen das Verfahren aufwändig und führen zum Anfall schwierig zu entsorgender Abfälle.

Nach den Verfahren aus DE 21 35 546 A1, US 5,283,042 und DE 42 03 011 A1 wird Aktivkohle in Form einer wässrigen Suspension oder als trockenes Pulver mit dem geschmolzenen gelben Phosphor in Kontakt gebracht und nach einer Verweilzeit durch Filtration oder Zentrifugieren wieder von ihm abgetrennt. Die Nachteile dieser Verfahren ergeben sich aus der notwendigen Feststoffhandhabung, das heißt die Zudosierung der Aktivkohle, die Abtrennung der verbrauchten Aktivkohle durch Filtration und das Ausschleusen der verbrauchten Aktivkohle aus dem Filterapparat. Insbesondere, wenn derartige Verfahren kontinuierlich durchgeführt werden sollen, bedeutet diese Feststoffhandhabung einen erheblichen verfahrenstechnischen Aufwand. Der Vorschlag, die Zudosierung der Aktivkohle dadurch zu erleichtern, dass diese als pumpfähige wässrige Suspension eingesetzt wird, bringt den Nachteil einer verringerten Raum-Zeit-Ausbeute mit sich.

Bei den Reinigungsverfahren aus dem Stand der Technik werden typischer Weise 0,5 bis 5 Gewichtsprozent Aktivkohle bezogen auf die gereinigte Menge an Phosphor verwendet. Wünschenswert ist es, den geforderten Reinigungseffekt mit einer möglichst geringen Menge an Aktivkohle zu erzielen. Das verringert nicht nur die Kosten für die Beschaffung der Aktivkohle, sondern auch den Aufwand und die Verluste an Phosphor, die mit der Entsorgung der verbrauchten Aktivkohle einher gehen.

Ein weiterer Nachteil der genannten Verfahren liegt nämlich darin begründet, dass die verbrauchte Aktivkohle nur unvollständig vom Phosphor abgetrennt werden kann. Der Filterkuchen enthält also beträchtliche Mengen Phosphor. Dies macht die Entsorgung des Filterkuchens wegen der Selbstentzündlichkeit des Phosphors an der Luft aufwändig. Außerdem stellt es einen wirtschaftlichen Verlust dar. Vorschläge zu Lösung dieses Problems sind bekannt. So soll der anhaftende Phosphor in der verbrauchten Aktivkohle nach DE 11 43 794 A1 zunächst durch Behandlung mit einer 5- bis 20%igen Kupfersulfatlösung unschädlich gemacht werden. Der gelbe Phosphor wird dadurch in ungefährliches Kupferphosphid umgewandelt. Nachteile dieses Verfahrens sind der wirtschaftliche Verlust dieser Phosphormenge und der Aufwand zur Entsorgung des Kupferphosphids. Nach US 4,664,896 soll der feste Filterkuchen mit flüssigem Phosphor verdünnt und so in eine fließfähige Suspension überführt werden, welche somit leichter einer Entsorgung zugeführt werden kann. Wirtschaftlich sinnvoll ist diese Vorgehensweise jedoch nur dann, wenn der in der Suspension enthaltene Phosphor zurückgewonnen werden kann. Dazu wird vorgeschlagen, die fließfähige Suspension in einen elektrothermischen Phosphorofen einzuspeisen, um damit den im Filterkuchen enthaltenen Phosphor zurückgewinnen zu können. Diese Lösung ist jedoch nur dann praktikabel, wenn der Transport des Filterkuchens zum Ofen mit vertretbarem Aufwand zu leisten ist.

Es ist Aufgabe der vorliegenden Erfindung, ein Verfahren zur Reinigung von unreinem, gelbem Phosphor durch Adsorption an Aktivkohle zur Verfügung zu stellen, das die genannten Nachteile des Standes der Technik überwindet.

Im Sinne der vorliegenden Erfindung soll unter dem Begriff "unreiner Phosphor" im Folgenden Tetraphosphor mit einem Gehalt an organischen Verunreinigungen von 10.000 bis 10 ppm verstanden werden und unter dem Begriff "gereinigter Phosphor" ein Tetraphosphor, der durch Reinigung von unreinem Phosphor nach dem erfindungsgemäßen Verfahren erhalten wurde und dessen Gehalt an organischen Verunreinigungen niedriger ist als der des eingesetzten unreinen Phosphors.

Gegenstand der Erfindung ist ein Verfahren zur Reinigung von unreinem Phosphor durch Adsorption an Aktivkohle, dadurch gekennzeichnet, dass
a) flüssiger unreiner Phosphor, ohne vorherige Behandlung mit Polyphosphorsäure, kontinuierlich mit mindestens einem Aktivkohle-Festbett, enthaltend mindestens eine Aktivkohle, vorzugsweise als Partikel mit einer Partikelgröße im Bereich von 0,5 bis 5 mm oder als Formkörper, in Kontakt gebracht wird,
   und
b) flüssiger gereinigter Phosphor kontinuierlich aus dem oder den Aktivkohle-Festbett(en) entnommen wird.

Vorzugsweise wird in Schritt a) des erfindungsgemäßen Verfahrens unreiner Phosphor eingesetzt, wie er bei der technischen Phosphorgewinnung anfällt. Vorzugsweise wird der Phosphor ohne jegliche vorgeschaltete Reinigungsschritte, so wie er bei der technischen Gewinnung anfällt, in Schritt a) des erfindungsgemäßen Verfahrens eingesetzt.

Vorzugsweise dient das erfindungsgemäße Verfahren zur Reinigung von unreinem Phosphor von organischen Verunreinigungen. Als organische Verunreinigungen sind solche Verbindungen zu verstehen, wie sie bei der technischen Gewinnung von Phosphor, z.B. durch Erhitzen von Phosphormineralien wie Phosphorit oder Apatit mit Quarzkies in einem Schmelz-Reduktionsofen, dem gewonnenen Phosphor beigemengt sind. Beispielsweise kann es sich bei den organischen Verunreinigungen um Kohlenwasserstoffe oder Phenole handeln.

Vorzugsweise wird in Schritt a) des erfindungsgemäßen Verfahrens unreiner Phosphor eingesetzt der einen Gehalt an organischen Verunreinigungen im Bereich von 5000 bis 10 ppm, besonders bevorzugt im Bereich von 3000 bis 50 ppm und insbesondere im Bereich von 1500 bis 100 ppm aufweist.

Vorzugsweise liegt der Gehalt an organischen Verunreinigungen in dem in Schritt b) des erfindungsgemäßen Verfahrens entnommenen gereinigten Phosphors mindestens 50 Prozent, besonders bevorzugt 55 bis 95 Prozent unter dem Gehalt an organischen Verunreinigungen des in Schritt a) des erfindungsgemäßen Verfahrens eingesetzten unreinen Phosphors.

Der Gehalt an organischen Verunreinigungen kann, in dem Fachmann bekannter Art und Weise, zum Beispiel durch gravimetrischen oder spektroskopische Methoden bestimmt werden.

Wesentlich für die vorliegende Erfindung ist, dass bei der Reinigung des unreinen Phosphors die Aktivkohle während der Kontaktierung mit und der Trennung von der flüssigen Phosphorphase ortsfest bleibt und die zu reinigende flüssige Phosphorphase kontinuierlich zur Aktivkohle hin und die gereinigte flüssige Phosphorphase kontinuierlich von ihr weg bewegt wird.

Im Sinne der vorliegenden Erfindung bedeutet der Begriff "Festbett" eine ortsfest, beispielsweise im Innern eines Behälters angeordnete Feststoff-Schüttung oder -Packung.

Das erfindungsgemäße Verfahren wird bevorzugt in mindestens einem geschlossenen Behälter durchgeführt. Als Behälter ist dabei ein abgegrenzter Raum zu verstehen, der geeignet ist, das erfindungsgemäße Verfahren durchzuführen. Der erfindungsgemäß einzusetzende Behälter dient dabei insbesondere der Aufnahme und Fixierung des Aktivkohle-Festbetts.

Der zur Durchführung des erfindungsgemäßen Verfahrens einzusetzende Behälter kann unterschiedliche, dem Fachmann bekannte Raumformen aufweisen, beispielweise zylinderförmig, konisch, kugelförmig oder eine geeignete Kombination dieser Formen. Vorzugsweise verfügt der Behälter zumindest über eine Eintrittsöffnung und eine Austrittsöffnung.

Der Behälter kann aus unterschiedlichen Materialien bestehen, beispielsweise aus metallischen Werkstoffen, insbesondere nichtrostendem Stahl oder Nichteisen-Metalllegierungen, Kunststoff oder Glas. Vorzugsweise besteht der Behälter aus nichtrostendem Stahl.

Besonders bevorzugt wird das erfindungsgemäße Verfahren in einem Behälter mit zylindrischer Form und einem Verhältnis von Höhe zu Breite von 10 : 1 bis 1 : 10, bevorzugt 5 : 1 bis 1 : 5, insbesondere einer Kolonne, durchgeführt.

Vorzugsweise verfügt der Behälter über mindestens eine Eintrittsstelle für den flüssigen unreinen Phosphor, mindestens eine Adsorptionszone und mindestens eine von der Eintrittsstelle räumlich entfernte Austrittsstelle für den gereinigten Phosphor.

Zur Durchführung des erfindungsgemäßen Verfahrens ist das Aktivkohle-Festbett vorzugsweise in der Adsorptionszone des Behälters angeordnet.

Vorzugsweise verfügt der zur Durchführung des erfindungsgemäßen Verfahrens eingesetzte Behälter über mindestens eine Vorrichtung zum Ein- und Ausbau und mindestens eine Vorrichtung zur Fixierung des Aktivkohle-Festbetts in der Adsorptionszone des Behälters.

Die Vorrichtung, die den Ein- und Ausbau des Aktivkohle-Festbetts in der Adsorptionszone des Behälters ermöglicht, wird für die Beladung des Behälters mit einem frischen Aktivkohle-Festbett und die Entnahme eines verbrauchten Aktivkohle-Festbetts benötigt. Dafür kommt beispielsweise ein Mannloch in Frage.

Als Vorrichtungen, die zur Fixierung des Aktivkohle-Festbetts in der Adsorptionszone des Behälters dienen, kommen beispielsweise Siebböden, Lochbleche oder Drahtnetze in Frage. Strukturierte Aktivkohle-Packungen, wie beispielsweise Aktivkohle-Kartuschen, werden durch entsprechende Einbauten im Behälter fixiert. Bevorzugt ist das Aktivkohle-Festbett in der Adsorptionszone des Behälters durch mindestens einen Siebboden fixiert.

Vorzugsweise besitzt der Behälter weiterhin Vorrichtungen zum Temperieren, beispielsweise eine Beheizung mit Dampf, Wärmeträgerflüssigkeiten oder elektrischen Heizelementen.

Vorzugsweise wird das erfindungsgemäße Verfahren so durchgeführt, dass der flüssige unreine Phosphor kontinuierlich über die Eintrittsstelle in den Behälter eingeleitet wird und kontinuierlich in der Adsorptionszone mit dem darin fixierten Aktivkohle-Festbett in Kontakt gebracht wird und an der Austrittsstelle des Behälters kontinuierlich der flüssige gereinigte Phosphor entnommen wird.

Mit dem Begriff "Aktivkohle" sind im Sinne der Erfindung kohlenstoffbasierte, feste Adsorbentien gemeint. Dies umfasst neben den bekannten Aktivkohlen im eigentlichen Sinne auch Aktivkoks und kohlenstoffbasierte Molekularsiebe aus Steinkohle, Kokoskoks sowie Holzkohle. Die für das erfindungsgemäße Verfahren geeigneten Aktivkohlen sind aus dem Stand der Technik bekannt. Maßgeblich für die Auswahl der Aktivkohle ist ihre Eignung zur Bildung eines fixierten Festbetts.

Bei der erfindungsgemäß eingesetzten Aktivkohle handelt es sich vorzugsweise um eine partikelförmige, insbesondere um eine gekörnte, gebrochene, granulierte, pelletierte, geformte oder kugelförmige Aktivkohle mit einer Partikelgröße von 0,5 bis 5 mm. Die spezifische innere Oberfläche beträgt bevorzugt von 500 bis 1500 m²/g.

Beispiele für geeignete Aktivkohlen sind die geformten oder gebrochenen Typen der Marken Flydraffin® und Epibon® (Hersteller: Donau Carbon), Filtrasorb® und AP 4-60 (Hersteller: Calgon-Carbon), Acticarbon® (Hersteller: Arkema), ColorSorb® (Hersteller: Jacobi) und C40/1 und CGK 8*16/90 (Hersteller: Carbotech AC GmbH).

Ebenfalls geeignet und bevorzugt sind aus Aktivkohle gebildete Formkörper wie z.B. poröse Einbauten und strukturierte Packungen, beispielsweise mit Wabenstruktur, oder faserige Aktivkohle, beispielsweise in Form von Fasermatten.

Das Aktivkohle-Festbett kann außer der Aktivkohle noch ein oder mehrere, von Aktivkohle verschiedene Adsorbentien enthalten, beispielsweise Zeolithe, Tonerden, Kieselgur, Kieselgele, Bleicherden, Perlite, Magnesiumsilikate, Glaspartikel oder organische Polymere. Vorzugsweise enthält das Aktivkohle-Festbett als weitere Adsorbentien Bleicherden und/oder Glaspartikel. Die von Aktivkohle verschiedenen Adsorbentien können in einer Menge von 0,1 bis 20 Gewichtsprozent, bevorzugt von 0,5 bis 10 Gewichtsprozent bezogen auf die Aktivkohle eingesetzt werden.

Die Menge der im Aktivkohle-Festbett enthaltenen Aktivkohle beträgt 0,1 bis 500 Gewichtsprozent bezogen auf die pro Stunde gemäß Schritt b) aus dem Aktivkohle-Festbett, vorzugsweise an der Austrittsstelle des Behälters, entnommene Menge an gereinigtem Phosphor. Bevorzugt beträgt die Aktivkohlemenge 1 bis 300 Gewichtsprozent, besonders bevorzugt 1 bis 50 Gewichtsprozent., jeweils bezogen auf die pro Stunde aus dem Aktivkohle-Festbett entnommene Menge an gereinigtem Phosphor.

Dem Fachmann ist bekannt wie die Größe des Festbettes in der Praxis zu bemessen ist, so dass eine Reinigung des Phosphors in technischem Maßstab realisierbar ist.

Das erfindungsgemäße Verfahren wird im allgemeinen bei einer Temperatur im Bereich von 45 bis 120°C durchgeführt, also in einem Temperaturbereich, in dem der Phosphor als Schmelze vorliegt. Bevorzugt wird das Verfahren bei einer Temperatur im Bereich von 45 bis 95°C durchgeführt. Hierbei handelt es sich um die Temperatur im Aktivkohle-Festbett, vorzugsweise um die Temperatur im Innern des Behälters.

Vorzugsweise wird der Phosphor im erfindungsgemäßen Verfahren stets mit einer Schicht Wasser ("Deckwasser") überlagert. Dies gilt insbesondere für Vorlagebehälter für den unreinen Phosphor und Auffangbehälter für den gereinigten Phosphor. Es ist für die Durchführung des erfindungsgemäßen Verfahrens unschädlich, wenn auch der Behälter mit dem Aktivkohle-Festbett Deckwasser enthält. Bevorzugt ist es allerdings, nur den flüssigen Phosphor in den Behälter zu leiten. Eine Trocknung des Phosphors vor der Reinigung ist nicht erforderlich.

Das erfindungsgemäße Verfahren wird im allgemeinen bei einem Druck durchgeführt, bei dem das Deckwasser im oben angegebenen Temperaturbereich nicht siedet. Bevorzugt wird es bei 0,1 bis 3,0 bar absolut durchgeführt.

Im allgemeinen wird der flüssige unreine Phosphor mit einem Volumenstrom durch die Adsorptionszone des Behälters geleitet, der eine mittlere Verweilzeit des Phosphors im Aktivkohle-Festbett von 1 bis 600 Minuten, vorzugsweise von 1 bis 300 Minuten und besonders bevorzugt von 2 bis 100 Minuten ermöglicht. Die mittlere Verweilzeit wird dabei definiert als Quotient aus dem Volumen des Festbetts zum austretenden Volumenstrom. In einer alternativen Ausführungsform des erfindungsgemäßen Verfahrens wird in Schritt a) der flüssige unreine Phosphor in zwei oder mehr Teilströme aufgeteilt und jeder Teilstrom mit einem separaten Aktivkohle-Festbett in Kontakt gebracht wobei sich vorzugsweise jedes Aktivkohle-Festbett in einem separaten Behälter befindet.

In einer weiteren alternativen Ausführungsform des erfindungsgemäßen Verfahrens wird der flüssige unreine Phosphor in zwei oder mehr Teilströme aufgeteilt und für jeden Teilstrom die Schritte a) und b) mit einem separaten Aktivkohle-Festbett, das sich vorzugsweise in einem separaten Behälter befindet, durchgeführt, wobei die Anzahl der Teilströme und die Anzahl der Aktivkohle-Festbetten bevorzugt so gewählt wird, dass immer mindestens ein Aktivkohle-Festbett für die Durchführung der Schritte a) und b) genutzt wird und mindestens in einem Aktivkohle-Festbett die Aktivkohle regeneriert oder ausgetauscht wird.

Die im unreinen Phosphor enthaltenen Verunreinigungen werden von der Aktivkohle adsorbiert. Bei der erfindungsgemäßen kontinuierlichen Phosphorreinigung nimmt die Reinigungswirkung der Aktivkohle durch die zunehmende Beladung mit Verunreinigungen ab. Wenn die Reinigungswirkung soweit abgenommen hat, dass die gewünschte Reinigung nicht mehr erreicht wird, wird die Phosphorreinigung unterbrochen und die mit Verunreinigungen beladene verbrauchte Aktivkohle durch frische Aktivkohle ersetzt oder durch ein geeignetes Verfahren regeneriert. Die Regenerierung verbrauchter Aktivkohle ist dem Fachmann bekannt, beispielsweise aus KLAUS-DIRK HENNING, HARTMUT VON KIENLE: "Carbon, 5. Activated Carbon" in Ullmann's Encyclopedia of Industrial Chemistry, Wiley, Weinheim 2010, Kapitel 5.

In einer alternativen Ausführungsform des erfindungsgemäßen Verfahrens wird, wenn die Reinigungswirkung der Aktivkohle im Aktivkohle-Festbetts verbraucht ist, im Anschluss an die Schritte a) und b)
c) das Aktivkohle-Festbett mit heißem Wasser oder Wasserdampf in Kontakt gebracht,
d) Wasser und Phosphor aus dem Aktivkohle-Festbett nach Schritt c) entnommen,
e) die verbrauchte Aktivkohle im Aktivkohle-Festbett regeneriert oder durch frische Aktivkohle ersetzt und
f) der in Schritt d) entnommene Phosphor wieder in Schritt a) zurückgeführt.

Bei dieser alternativen Ausführungsform des erfindungsgemäßen Verfahrens kann ein Großteil des in der verbrauchten Aktivkohle enthaltenen Phosphors zurückgewonnen werden. Dadurch wird der wirtschaftliche Verlust dieses Phosphorgehaltes vermindert und die sichere Handhabung der gebrauchten Aktivkohle deutlich vereinfacht.

In einer bevorzugten alternativen Ausführungsform des erfindungsgemäßen Verfahrens wird der flüssige unreine Phosphor in zwei oder mehr Teilströme aufgeteilt und für jeden Teilstrom die Schritte a) und b) mit einem separaten Aktivkohle-Festbett, das sich vorzugsweise jeweils in einem separaten Behälter befindet, durchgeführt, wobei die Anzahl der Teilströme und die Anzahl der Aktivkohle-Festbetten so gewählt wird, dass immer mindestens ein Aktivkohle-Festbett für die Durchführung der Schritte a) und b) genutzt wird und mindestens in einem Aktivkohle-Festbett die Durchführung der Schritte c) bis f) erfolgt.

Vorzugsweise wird in Schritt c) des erfindungsgemäßen Verfahrens in diesen weiteren alternativen Ausführungsformen flüssiges Wasser mit einer Temperatur von 45 bis 160 °C oder Wasserdampf mit einer Temperatur von 100 bis 240 °C eingesetzt.

Vorzugsweise wird Schritt c) des erfindungsgemäßen Verfahrens in diesen weiteren alternativen Ausführungsformen so durchgeführt, dass das flüssige oder dampfförmige Wasser kontinuierlich über die Eintrittsstelle in den oder die Behälter eingeleitet wird und kontinuierlich in der Adsorptionszone mit dem darin fixierten verbrauchten Aktivkohle-Festbett in Kontakt gebracht wird, und an der Austrittsstelle bzw. den Austrittstellen des Behälters bzw. der Behälter kontinuierlich, gegebenenfalls unter Kühlung, vorzugsweise auf 45 bis 90 °C, der flüssige Phosphor entnommen wird.

Mit dem erfindungsgemäßen Verfahren gelingt es in kontinuierlicher Arbeitsweise mit Hilfe eines Aktivkohle-Festbetts in unreinem Phosphor den Gehalt an organischen Verunreinigungen im Bereich von 10.000 bis 10 ppm um mindestens 50 Prozent zu reduzieren. Eine Zudosierung und Filtration der Aktivkohle ist dabei nicht erforderlich sind. Die Fixierung der Aktivkohle in einem Festbett ermöglicht darüber hinaus eine einfache Rückgewinnung des darin enthaltenen Phosphors aus der verbrauchten Aktivkohle.

Anhand der nachfolgenden Beispiele wird die Erfindung näher erläutert, ohne dass dadurch eine Einschränkung der Erfindung bewirkt werden soll.

### Beispiele

### Beispiel 1: Kontinuierliche Reinigung von unreinem gelbem Phosphor mit Aktivkohle-Festbett (erfindungsgemäß)

In einem Glasrohr mit 22,3 mm Innendurchmesser wurde ein kreisförmiges, passendes Edelstahlnetz als Siebboden fixiert. Nun wurde eine wässrige Suspension aus 11,3 g granulierter Aktivkohle des Typs "C40/1" der Fa. Carbotech AC GmbH, Essen, in das Rohr gefüllt. Das Volumen der Aktivkohleschüttung betrug 29,8 ml. Beide Enden des Rohres wurden dann mittels Schraubkappen mit Schlauchanschlüssen versehen. Das Rohr wurde in einem auf 55 °C temperierten Wasserbad positioniert.

Eine mit Deckwasser überlagerte Probe von unreinem Phosphor wurde aufgeschmolzen. Die Schmelze war trübe, gelbbraun und enthielt 1100 ppm organische Verunreinigungen. Mit einer Pumpe wurde die Schmelze mit konstanter Förderleistung in das mit der Aktivkohle beschickte Glasrohr gepumpt. Der am anderen Ende des Glasrohrs austretende gereinigte Phosphor wurde in mit Deckwasser überlagerten, auf 55 °C temperierten Glasgefäßen in zehn Fraktionen aufgefangen. Die Phosphorschmelze war klar und hellgelb. Die Massen der Fraktionen und ihr Gehalt an organischen Verunreinigungen wurden bestimmt, die Ergebnisse sind in Tabelle 1 wiedergegeben. Nach 25,9 Stunden Laufzeit waren 1822,7 g gereinigter Phosphor aufgefangen worden und der Versuch wurde abgebrochen.

Die Auswertung der Auswaagen ergab, dass der Volumenstrom über die gesamte Versuchsdauer konstant bei 41 ml/h gelegen hatte. Daraus ergibt sich eine mittlere Verweilzeit des gelben Phosphors im Festbett von 44 Minuten. Die im Festbett enthaltene Menge Aktivkohle entsprach 15 Gewichtsprozent bezogen auf die pro Stunde aus der Adsorptionszone entnommenen Masse an Phosphor.

Der Gehalt an organischen Verunreinigungen im gelben Phosphor wurde deutlich reduziert, wobei die Reinigungswirkung im Laufe des Versuchs nachließ. Die Gesamtmenge von 1822,7 g gereinigtem gelbem Phosphor enthielt 180 ppm organische Verunreinigungen, also nur 16 % der ursprünglich enthaltenen Menge. Der Gehalt an organischen Verunreinigungen im gereinigten Phosphor lag demnach 84 % unter dem Gehalt an organischen Verunreinigungen im eingesetzten unreinen Phosphor. Die für diesen Reinigungsversuch eingesetzte Menge an Aktivkohle entsprach 0,6 Gewichtsprozent der gesamten Menge an gelbem Phosphor.

**Tabelle 1: Auswaagen und Reinheit des Phosphors nach Reinigung am Aktivkohle-Festbett aus Beispiel 1**

| **Fraktion** | **Zeitpunkt der Probennahme [h]** | **Masse der Probe [g]** | **Gehalt an organischen Verunreinigungen [ppm]** |
|---|---|---|---|
| 1 | 2,8 | 100,7 | 37 |
| 2 | 6,6 | 274,5 | 40 |
| 3 | 11,6 | 393,5 | 106 |
| 4 | 13,8 | 146,4 | 146 |
| 5 | 15,5 | 146,4 | 193 |
| 6 | 18,2 | 146,4 | 206 |
| 7 | 19,5 | 146,4 | 261 |
| 8 | 21,6 | 151,9 | 280 |
| 9 | 23,7 | 151,9 | 312 |
| 10 | 25,9 | 164,7 | 392 |

### Beispiel 2: Reinigung von unreinem gelbem Phosphor mit Aktivkohle nach einem Batch-Verfahren (nicht erfindungsgemäß

54,2 g verunreinigter gelber Phosphor mit einem Gehalt an organische Verunreinigungen von 1120 ppm wurden unter einer Deckschicht aus Wasser aufgeschmolzen. Die Schmelze war trübe und gelbbraun. Sie wurde mit einer wässrigen Suspension aus 0,65 g granulierter Aktivkohle des Typs "C40/1" der Fa. Carbotech AC GmbH, Essen, versetzt und mit einem Magnetrührer für eine Verweilzeit von 60 Minuten bei 55 °C verrührt. Die erhaltene Mischung wurde unter Deckwasser über eine Glasfritte der Porosität 2 filtriert. Als Filtrat wurde eine nahezu klare Schmelze von gelbem Phosphor aufgefangen, die einen Gehalt an organischen Verunreinigungen von 970 ppm enthielt.

Die einfache Batch-Reinigung mit 1,2 % Aktivkohle bezogen auf die Menge an gelbem Phosphor hat also den Gehalt an organischen Verunreinigungen auf 87 % der ursprünglich enthaltenen Menge verringert. Der Gehalt an organischen Verunreinigungen im gereinigten Phosphor lag demnach um 13 % unter dem Gehalt an organischen Verunreinigungen im eingesetzten unreinen Phosphor.

### Beispiel 3: Reinigung von gelbem Phosphor mit Aktivkohle nach einem Batch-Verfahren (nicht erfindungsgemäß)

97,2 g verunreinigter gelber Phosphor mit einem Gehalt an organischen Verunreinigungen von 830 ppm wurde unter einer Deckschicht aus Wasser aufgeschmolzen. Die Schmelze war trübe und gelbbraun. Sie wurde mit einer wässrigen Suspension aus 1,94 g granulierter Aktivkohle des Typs "C40/1" der Fa. Carbotech AC GmbH, Essen, versetzt und mit einem Magnetrührer für eine Verweilzeit von 60 Minuten bei 60 °C verrührt. Die erhaltene Mischung wurde unter Deckwasser über eine Glasfritte der Porösität 2 filtriert. Als Filtrat wurde eine nahezu klare Schmelze von gelbem Phosphor aufgefangen, der einen Gehalt an organische Verunreinigungen von 300 ppm enthielt.

Die einfache Batch-Reinigung mit 2,0 % Aktivkohle bezogen auf die Menge an gelbem Phosphor hat also den Gehalt an organischen Verunreinigungen auf 36 % der ursprünglich enthaltenen Menge verringert. Der Gehalt an organischen Verunreinigungen im gereinigten Phosphor lag demnach 64 % unter dem Gehalt an organischen Verunreinigungen im eingesetzten unreinen Phosphor.

Fazit: Die Vergleichsbeispiele 2 und 3 zeigen, dass in der einfachen Batch-Reinigung nach dem Stand der Technik mit 1,2 % beziehungsweise 2,0 % Aktivkohle bezogen auf die Menge an gelbem Phosphor eine Verringerung der organischen Verunreinigungen auf 87 % beziehungsweise 36 % der ursprünglich enthaltenen Menge erreicht wird. Im Gegensatz dazu wird bei dem erfindungsgemäßen, kontinuierlichen Verfahren (vgl. Beispiel 1) mit nur 0,6 % Aktivkohle bezogen auf die Menge an gelbem Phosphor eine Verringerung der organischen Verunreinigungen auf 16 % der ursprünglich enthaltenen Menge erreicht. Die Wirksamkeit der Reinigung ist also im erfindungsgemäßen Verfahren deutlich besser.

### Beispiel 4: Kontinuierliche Reinigung von unreinem gelbem Phosphor mit Aktivkohle-Festbett (erfindungsgemäß)

Ein Glasrohr wie in Beispiel 1 beschrieben wurde mit einer wässrigen Suspension aus 11,3 g granulierter Aktivkohle des Typs "C40/1" der Fa. Carbotech AC GmbH, Essen, gefüllt und in einem auf 55 °C temperierten Wasserbad positioniert.

Eine erste mit Deckwasser überlagerte Probe von rohem gelbem Phosphor wurde aufgeschmolzen. Die Schmelze war trübe, gelbbraun und enthielt 990 ppm organische Verunreinigungen. Mit einer Pumpe wurde die Schmelze mit konstanter Förderleistung in das mit der Aktivkohle beschickte Glasrohr gepumpt. Der am anderen Ende des Glasrohrs austretende gereinigte gelbe Phosphor wurde in mit Wasser überlagerten, auf 55 °C temperierten Glasgefäßen in den Fraktionen 1 bis 10 aufgefangen, siehe Tabelle 2. Nach 21,0 Stunden waren insgesamt 1639,7 g gereinigter gelber Phosphor aufgefangen worden. Der Versuch wurde dann unter gleichen Bedingungen mit einer zweiten Probe von rohem gelbem Phosphor fortgesetzt. Diese zweite Probe enthielt 1020 ppm organische Verunreinigungen. Der Ablauf aus dem Glasrohr wurde in den Fraktionen 11 bis 34 aufgefangen, siehe Tabelle 3. Nach insgesamt 69,0 Stunden waren 5352,8 g gelber Phosphor über dasselbe Aktivkohle-Festbett gereinigt worden und der Versuch wurde abgebrochen.

Alle der insgesamt 34 Fraktionen wurden ausgewogen und neun ausgewählte Fraktionen wurden analysiert, die Ergebnisse sind in den Tabellen 2 und 3 wiedergegeben. Die Auswertung der Auswaagen ergab, dass der Volumenstrom über die gesamte Versuchsdauer konstant bei 43 ml/h gelegen hatte. Daraus ergibt sich eine mittlere Verweilzeit des gelben Phosphors im Festbett von 41 Minuten. Die im Festbett enthaltene Menge Aktivkohle entsprach 14 Gewichtsprozent bezogen auf die pro Stunde aus der Adsorptionszone entnommenen Masse an Phosphor. Der Gehalt an organischen Verunreinigungen im gelben Phosphor wurde deutlich reduziert, wobei die Reinigungswirkung im Laufe des Versuchs nachließ. Die Gesamtmenge von 5352,8 g gereinigtem gelbem Phosphor enthielt 450 ppm organische Verunreinigungen, also nur 44 % der ursprünglich enthaltenen Menge. Die für diesen Reinigungsversuch eingesetzte Menge an Aktivkohle entsprach 0,2 % der gesamten Menge an gelbem Phosphor.

**Tabelle 2: Auswaagen und Reinheit des Phosphors (Fraktionen 1 bis 10) nach Reinigung am Aktivkohle-Festbett aus Beispiel 4**

| **Fraktion** | **Zeitpunkt der Probennahme [h]** | **Masse der Probe [g]** | **Gehalt an organischen Verunreinigungen [ppm]** |
|---|---|---|---|
| 1 | 2,5 | 135,42 | 41 |
| 2 | 4,6 | 139,08 | |
| 3 | 6,6 | 164,70 | |
| 4 | 8,6 | 161,04 | |
| 5 | 11,0 | 164,70 | 132 |
| 6 | 13,0 | 157,38 | |
| 7 | 15,5 | 183,00 | |
| 8 | 17,7 | 173,85 | 229 |
| 9 | 18,7 | 192,15 | |
| 10 | 21,0 | 168,36 | |

**Tabelle 3: Auswaagen und Reinheit des Phosphors (Fraktionen 11 bis 34) nach Reinigung am Aktivkohle-Festbett aus Beispiel 4**

| **Fraktion** | **Zeitpunkt der Probennahme [h]** | **Masse der Probe [g]** | **Gehalt an organischen Verunreinigungen [ppm]** |
|---|---|---|---|
| 11 | 23,0 | 164,70 | 345 |
| 12 | 25,0 | 173,85 | |
| 13 | 27,0 | 155,55 | |
| 14 | 29,0 | 157,38 | |
| 15 | 31,0 | 153,72 | 503 |
| 16 | 33,0 | 157,38 | |
| 17 | 35,0 | 151,89 | |
| 18 | 37,0 | 146,40 | |
| 19 | 39,0 | 153,72 | |
| 20 | 41,0 | 153,72 | 543 |
| 21 | 43,0 | 161,04 | |
| 22 | 45,0 | 144,57 | |
| 23 | 47,0 | 153,72 | |
| 24 | 49,0 | 150,06 | |
| 25 | 51,0 | 150,06 | 636 |
| 26 | 53,0 | 142,74 | |
| 27 | 55,0 | 157,38 | |
| 28 | 57,0 | 153,72 | |
| 29 | 59,0 | 155,55 | |
| 30 | 61,0 | 157,38 | 654 |
| 31 | 63,0 | 157,38 | |
| 32 | 65,0 | 153,72 | |
| 33 | 67,0 | 172,02 | |
| 34 | 69,0 | 135,42 | 697 |

### Beispiel 5: Kontinuierliche Reinigung von unreinem gelbem Phosphor mit Aktivkohle-Festbett (erfindungsgemäß)

Ein Glasrohr wie in Beispiel 1 beschrieben wurde mit einer wässrigen Suspension aus 11,3 g granulierter Aktivkohle des Typs "C40/1" der Fa. Carbotech AC GmbH, Essen, gefüllt und in einem auf 55 °C temperierten Wasserbad positioniert.

Eine mit Deckwasser überlagerte Probe von rohem gelbem Phosphor wurde aufgeschmolzen. Die Schmelze war trübe, gelbbraun und enthielt 1230 ppm organische Verunreinigungen. Mit einer Pumpe wurde die Schmelze mit konstanter, jedoch gegenüber den Beispielen 1 und 4 erhöhter Förderleistung in das mit der Aktivkohle beschickte Glasrohr gepumpt. Der am anderen Ende des Glasrohrs austretende gereinigte gelbe Phosphor wurde in mit Wasser überlagerten, auf 55 °C temperierten Glasgefäßen in sechs Fraktionen aufgefangen. Die Phosphorschmelze war klar und hellgelb. Die Fraktionen wurden ausgewogen und zwei ausgewählte Fraktionen wurden analysiert, die Ergebnisse sind in Tabelle 4 wiedergegeben. Nach 120 Minuten waren insgesamt 1024,8 g gereinigter gelber Phosphor aufgefangen worden.

Die Auswertung der Auswaagen ergab, dass der Volumenstrom über die gesamte Versuchsdauer konstant bei 311 ml/h gelegen hatte. Daraus ergibt sich eine mittlere Verweilzeit des gelben Phosphors im Festbett von 5,8 Minuten. Die im Festbett enthaltene Menge Aktivkohle entsprach 2 Gewichtsprozent bezogen auf die pro Stunde aus der Adsorptionszone entnommenen Masse an Phosphor. Der Gehalt an organischen Verunreinigungen im gelben Phosphor wurde deutlich reduziert, wobei die Reinigungswirkung im Laufe des Versuchs nachließ.

**Tabelle 4: Auswaagen und Reinheit des Phosphors nach Reinigung am Aktivkohle-Festbett aus Beispiel 5**

| **Fraktion** | **Zeitpunkt der Probennahme [min]** | **Masse der Probe [g]** | **Gehalt an organischen Verunreinigungen [ppm]** |
|---|---|---|---|
| 1 | 28 | 157,38 | 170 |
| 2 | 44 | 153,72 | |
| 3 | 63 | 192,15 | |
| 4 | 80 | 162,87 | |
| 5 | 101 | 183,00 | 463 |
| 6 | 120 | 175,68 | |

### Beispiel 6: Kontinuierliche Reinigung von unreinem gelbem Phosphor mit Aktivkohle-Festbett (erfindungsgemäß)

Ein Glasrohr wie in Beispiel 1 beschrieben wurde mit einer wässrigen Suspension aus 11,3 g granulierter Aktivkohle des Typs "CGK 8^{∗}16/90" der Fa. Carbotech AC GmbH, Essen, gefüllt und in einem auf 55 °C temperierten Wasserbad positioniert.

Eine mit Deckwasser überlagerte Probe von rohem gelbem Phosphor wurde aufgeschmolzen. Die Schmelze war trübe, gelbbraun und enthielt 1150 ppm organische Verunreinigungen. Mit einer Pumpe wurde die Schmelze mit konstanter Förderleistung in das mit der Aktivkohle beschickte Glasrohr gepumpt. Der am anderen Ende des Glasrohrs austretende gereinigte gelbe Phosphor wurde in mit Wasser überlagerten, auf 55 °C temperierten Glasgefäßen in Fraktionen aufgefangen. Die Phosphorschmelze war klar und hellgelb. Die Fraktionen wurden ausgewogen und acht ausgewählte Fraktionen wurden analysiert, die Ergebnisse sind in Tabelle 5 wiedergegeben. Nach 47,8 Stunden waren insgesamt 3645,4 g gereinigter gelber Phosphor aufgefangen worden.

Die Auswertung der Auswaagen ergab, dass der Volumenstrom über die gesamte Versuchsdauer konstant bei 43 ml/h gelegen hatte. Daraus ergibt sich eine mittlere Verweilzeit des gelben Phosphors im Festbett von 42 Minuten. Die im Festbett enthaltene Menge Aktivkohle entsprach 14 Gewichtsprozent bezogen auf die pro Stunde aus der Adsorptionszone entnommenen Masse an Phosphor. Der Gehalt an organischen Verunreinigungen im gelben Phosphor wurde deutlich reduziert, wobei die Reinigungswirkung im Laufe des Versuchs nachließ.

**Tabelle 5: Auswaagen und Reinheit des Phosphors nach Reinigung am Aktivkohle-Festbett aus Beispiel 6**

| **Fraktion** | **Zeitpunkt der Probennahme [min]** | **Masse der Probe [g]** | **Gehalt an organischen Verunreinigungen [ppm]** |
|---|---|---|---|
| 1 | 2,6 | 139,08 | 324 |
| 2 | 5,1 | 204,96 | |
| 3 | 7,1 | 146,40 | |
| 4 | 9,6 | 190,32 | 402 |
| 5 | 12,0 | 183,00 | |
| 6 | 14,5 | 201,30 | |
| 7 | 17,7 | 190,32 | 388 |
| 8 | 19,8 | 183,00 | |
| 9 | 21,5 | 146,40 | |
| 10 | 23,7 | 179,34 | 505 |
| 11 | 25,8 | 179,34 | |
| 12 | 27,8 | 161,04 | |
| 13 | 30,1 | 179,34 | 517 |
| 14 | 32,2 | 172,02 | |
| 15 | 34,7 | 201,30 | |
| 16 | 37,0 | 162,87 | 535 |
| 17 | 39,2 | 175,68 | |
| 18 | 41,6 | 186,66 | |
| 19 | 43,6 | 150,06 | 593 |
| 20 | 45,8 | 162,87 | |
| 21 | 47,8 | 150,06 | 608 |

### Beispiel 7: Rückgewinnung von gelbem Phosphor aus einem Aktivkohle-Festbett (erfindungsgemäß)

Nach Ende des in Beispiel 1 beschriebenen Reinigungsversuchs wurde dem Glasrohr unter Wasser eine Probe der gebrauchten Aktivkohle entnommen. Auch im wasserfeuchten Zustand entzündete sich diese Aktivkohle bei Raumtemperatur von selbst, sobald sie Luftkontakt hatte.

Das mit der restlichen gebrauchten Aktivkohle gefüllte Glasrohr wurde wieder mit den Schlauchanschlüssen versehen und außerhalb des Wasserbades mit einem elektrischen Heizband auf ca. 110 °C erhitzt. Dann wurde über den einen Schlauchanschluss kochendes Wasser in das Glasrohr gepumpt. Das am anderen Schlauchanschluss aus dem Glasrohr austretende Flüssigkeitsgemisch wurde in eine mit Deckwasser gefüllte Vorlage geleitet und dort auf ca. 55 °C abgekühlt. In der Vorlage schied sich eine flüssige Phosphorphase ab.

Als sich bei der Wäsche mit kochendem Wasser kein weiterer Phosphor mehr in der Vorlage abschied, wurde der Rückgewinnungsversuch abgebrochen. Die Säule wurde nach Erkalten wiederum unter Wasser geöffnet, um eine Probe der gebrauchten Aktivkohle zu entnehmen. Diese Aktivkohle war an Luft nicht mehr selbstentzündlich, auch nachdem sie getrocknet war.

Dieses Beispiel zeigt, dass die gebrauchte Aktivkohle aufgrund ihres Phosphorgehaltes gefährlich und schwer zu handhaben ist. Durch das erfindungsgemäße Rückgewinnungsverfahren wird der wirtschaftliche Verlust dieses Phosphorgehaltes vermindert und die Handhabung der gebrauchten Aktivkohle deutlich vereinfacht.

## Patentansprüche

1. Verfahren zur Reinigung von unreinem Phosphor, **dadurch gekennzeichnet, dass**
a) flüssiger unreiner Phosphor, ohne vorherige Behandlung mit Polyphosphorsäure, kontinuierlich mit mindestens einem Aktivkohle-Festbett enthaltend mindestens eine Aktivkohle, vorzugsweise als Partikel mit einer Partikelgröße im Bereich von 0,5 bis 5 mm oder als Formkörper, in Kontakt gebracht wird
und
b) flüssiger gereinigter Phosphor kontinuierlich aus dem oder den Aktivkohle-Festbett(en) entnommen wird.

2. Verfahren gemäß Anspruch 1, **dadurch gekennzeichnet, dass** das Aktivkohle-Festbett mindestens eine Aktivkohle ausgewählt aus der Reihe der gekörnten, gebrochenen, granulierten, pelletierten, geformten oder kugelförmigen Aktivkohlen, vorzugsweise mit einer Partikelgröße von 0,5 bis 5 mm und vorzugsweise mit einer spezifischen innere Oberfläche von 500 bis 1500 m²/g, enthält.

3. Verfahren gemäß Anspruch 1 oder 2, **dadurch gekennzeichnet, dass** das Aktivkohle-Festbett 0,1 bis 500 Gewichtsprozent Aktivkohle, vorzugsweise 1 bis 300 Gewichtsprozent Aktivkohle, und insbesondere 1 bis 50 Gewichtsprozent Aktivkohle, bezogen auf die in Schritt b) pro Stunde aus dem Aktivkohle-Festbett entnommene Menge an gereinigtem Phosphor enthält.

4. Verfahren gemäß wenigstens einem der Ansprüche 1 bis 3, **dadurch gekennzeichnet, dass** das Aktivkohle-Festbett ein oder mehrere Adsorbentien aus der Reihe der Zeolithe, Tonerden, Kieselgur, Kieselgele, Bleicherden, Perlite, Magnesiumsilikate, Glaspartikel oder organische Polymere in einer Menge von 0,1 bis 20 Gewichtsprozent, bevorzugt von 0,5 bis 10 Gewichtsprozent bezogen auf die Aktivkohle enthält.

5. Verfahren gemäß wenigstens einem der Ansprüche 1 bis 4, **dadurch gekennzeichnet dass** es bei einer Temperatur im Bereich von 45 bis 120 °C, vorzugsweise im Bereich von 45 bis 95 °C durchgeführt wird.

6. Verfahren gemäß wenigstens einem der Ansprüche 1 bis 5, **dadurch gekennzeichnet dass** es bei einem Druck im Bereich von 0,1 bis 3,0 bar durchgeführt wird.

7. Verfahren gemäß wenigstens einem der Ansprüche 1 bis 6, **dadurch gekennzeichnet dass** der flüssige unreine Phosphor mit einem Volumenstrom durch das Aktivkohle-Festbett geleitet wird, der eine mittlere Verweilzeit des Phosphors im Aktivkohle-Festbett von 1 bis 600 Minuten, vorzugsweise von 1 bis 300 Minuten und besonders bevorzugt von 2 bis 100 Minuten ermöglicht, wobei die mittlere Verweilzeit dem Quotienten aus dem Volumen des Festbetts und dem austretenden Volumenstrom entspricht.

8. Verfahren gemäß wenigstens einem der Ansprüche 1 bis 7, **dadurch gekennzeichnet, dass** die Schritte a) und b) in mindestens einem Behälter, vorzugsweise mit zylinderförmiger Ausgestaltung, durchgeführt werden, der vorzugsweise über mindestens eine Eintrittsstelle für den flüssigen unreinen Phosphor, mindestens eine Adsorptionszone zur Aufnahme von mindestens einem Aktivkohle-Festbett, mindestens einen Siebboden zur Fixierung von mindestens einem Aktivkohle-Festbett und mindestens eine von der Eintrittsstelle räumlich entfernte Austrittsstelle für den gereinigten Phosphor verfügt.

9. Verfahren gemäß wenigstens einem der Ansprüche 1 bis 9, **dadurch gekennzeichnet dass** in Schritt a) der flüssige unreine Phosphor in zwei oder mehr Teilströme aufgeteilt und jeder Teilstrom mit mindestens einem Aktivkohle-Festbett, das sich vorzugsweise jeweils in einem separaten Behälter befindet, in Kontakt gebracht wird.

10. Verfahren gemäß wenigstens einem der Ansprüche 1 bis 9, **dadurch gekennzeichnet, dass** der flüssige unreine Phosphor in Schritt a) in zwei oder mehr Teilströme aufgeteilt wird und für jeden Teilstrom die Schritte a) und b) mit einem separaten Aktivkohle-Festbett, das sich vorzugsweise in einem separaten Behälter befindet, durchgeführt werden, wobei die Anzahl der Teilströme und die Anzahl der Aktivkohle-Festbetten so gewählt wird, dass immer mindestens ein Aktivkohle-Festbett für die Durchführung der Schritte a) und b) genutzt wird und mindestens in einem Aktivkohle-Festbett die Aktivkohle regeneriert oder ausgetauscht wird.

11. Verfahren gemäß wenigstens einem der Ansprüche 1 bis 10, **dadurch gekennzeichnet, dass** im Anschluss an die Schritte a) und b)
c) das Aktivkohle-Festbett mit heißem Wasser oder Wasserdampf in Kontakt gebracht wird,
d) Wasser und Phosphor aus dem Aktivkohle-Festbett nach Schritt c) entnommen werden,
e) die verbrauchte Aktivkohle im Aktivkohle-Festbett regeneriert oder durch frische Aktivkohle ersetzt wird, und
f) der in Schritt d) entnommene Phosphor wieder in Schritt a) zurückgeführt wird.

12. Verfahren gemäß Anspruch 10 und 11, **dadurch gekennzeichnet, dass** der flüssige unreine Phosphor in Schritt a) in zwei oder mehr Teilströme aufgeteilt wird und für jeden Teilstrom die Schritte a) und b) mit einem separaten Aktivkohle-Festbett, das sich vorzugsweise in einem separaten Behälter befindet, durchgeführt werden, wobei die Anzahl der Teilströme und die Anzahl der Aktivkohle-Festbetten so gewählt wird, dass immer mindestens ein Aktivkohle-Festbett für die Durchführung der Schritte a) und b) genutzt wird und mindestens in einem Aktivkohle-Festbett die Durchführung der Schritte c) bis f) erfolgt.

13. Verfahren gemäß Ansprüchen 10 und 11, **dadurch gekennzeichnet, dass** in Schritt c) flüssiges Wasser mit einer Temperatur von 45 bis 160 °C oder Wasserdampf mit einer Temperatur von 100 bis 240 °C eingesetzt wird..

## Claims

1. Process for purifying impure phosphorus, **characterized in that**
a) without prior treatment with polyphosphoric acid liquid impure phosphorus is continuously contacted with at least one activated carbon fixed bed containing at least one activated carbon, preferably as particles having a particle size in the range from 0.5 to 5 mm or as molded bodies,
and
b) liquid purified phosphorus is continuously withdrawn from the activated carbon fixed bed(s).

2. Process according to Claim 1, **characterized in that** the activated carbon fixed bed contains at least one activated carbon selected from the group of grained, crushed, granulated, pelletized, molded or spherical activated carbons, preferably having a particle size of 0.5 to 5 mm and preferably having a specific internal surface area of 500 to 1500 m²/g.

3. Process according to Claim 1 or 2, **characterized in that** the activated carbon fixed bed contains 0.1 to 500 weight percent of activated carbon, preferably 1 to 300 weight percent of activated carbon and in particular 1 to 50 weight percent of activated carbon based on the amount of purified phosphorus withdrawn from the activated carbon fixed bed per hour in step b).

4. Process according to at least one of Claims 1 to 3, **characterized in that** the activated carbon fixed bed contains one or more adsorbents from the group of zeolites, argillaceous earths, diatomaceous earths, silica gels, fuller's earths, perlites, magnesium silicates, glass particles or organic polymers in an amount of 0.1 to 20 weight percent, preferably of 0.5 to 10 weight percent, based on the activated carbon.

5. Process according to at least one of Claims 1 to 4, **characterized in that** it is performed at a temperature in the range from 45°C to 120°C, preferably in the range from 45°C to 95°C.

6. Process according to at least one of Claims 1 to 5, **characterized in that** it is performed at a pressure in the range from 0.1 to 3.0 bar.

7. Process according to at least one of Claims 1 to 6, **characterized in that** the liquid impure phosphorus is passed through the activated carbon fixed bed with a volume flow that ensures an average residence time of the phosphorus in the activated carbon fixed bed of 1 to 600 minutes, preferably of 1 to 300 minutes and particularly preferably of 2 to 100 minutes, wherein the average residence time is the quotient of the volume of the fixed bed and the outflowing volume flow.

8. Process according to at least one of Claims 1 to 7, **characterized in that** the steps a) and b) are performed in at least one container which is preferably cylindrical in shape and which preferably has at least one inflow point for the liquid impure phosphorus, at least one adsorption zone for receiving at least one activated carbon fixed bed, at least one sieve tray for securing at least one activated carbon fixed bed and at least one outflow point for the purified phosphorus which is spatially removed from the inflow point.

9. Process according to at least one of Claims 1 to 9, **characterized in that** in step a) the liquid impure phosphorus is divided into two or more substreams and each substream is contacted with at least one activated carbon fixed bed which is preferably arranged in a separate container in each case.

10. Process according to at least one of Claims 1 to 9, **characterized in that** in step a) the liquid impure phosphorus is divided into two or more substreams and for each substream the steps a) and b) are performed with a separate activated carbon fixed bed which is preferably arranged in a separate container, wherein the number of substreams and the number of activated carbon fixed beds is chosen such that always at least one activated carbon fixed bed is utilized for performing steps a) and b) and in at least one activated carbon fixed bed the activated carbon is regenerated or replaced.

11. Process according to at least one of Claims 1 to 10, **characterized in that** it comprises following steps a) and b) with the steps of
c) contacting the activated carbon fixed bed with hot water or water vapor,
d) withdrawing water and phosphorus from the activated carbon fixed bed according to step c),
e) regenerating or replacing with fresh activated carbon the spent activated carbon in the activated carbon fixed bed and
f) recycling the phosphorus withdrawn in step d) back into step a).

12. Process according to Claim 10 and 11, **characterized in that** the liquid impure phosphorus is divided into two or more substreams in step a) and for each substream the steps a) and b) are performed with a separate activated carbon fixed bed which is preferably arranged in a separate container, wherein the number of substreams and the number of activated carbon fixed beds is chosen such that always at least one activated carbon fixed bed is utilized for performing steps a) and b) and in at least one activated carbon fixed bed steps c) to f) are performed.

13. Process according to Claims 10 and 11, **characterized in that** in step c) liquid water at a temperature of 45°C to 160°C or water vapor at a temperature of 100°C to 240°C is employed.

## Revendications

1. Procédé pour la purification de phosphore impur, **caractérisé en ce que**
a) du phosphore impur liquide, sans traitement préalable avec de l'acide polyphosphorique, est mis en contact de manière continue avec au moins un lit fixe de charbon actif contenant au moins un charbon actif, de préférence en tant que particules dotées d'une taille de particule dans la plage de 0,5 à 5 mm ou en tant que corps moulé,
et
b) du phosphore purifié liquide est retiré de manière continue du ou des lit(s) fixe(s) de charbon actif.

2. Procédé selon la revendication 1, **caractérisé en ce que** le lit fixe de charbon actif contient au moins un charbon actif choisi dans la série des charbons actifs en grains, cassés, granulés, mis en pastilles, moulés ou sphériques, de préférence dotés d'une taille de particule de 0,5 à 5 mm et de préférence dotés d'une surface interne spécifique de 500 à 1 500 m²/g.

3. Procédé selon la revendication 1 ou 2, **caractérisé en ce que** le lit fixe de charbon actif contient 0,1 à 500 pour cent en poids de charbon actif, de préférence 1 à 300 pour cent en poids de charbon actif, et notamment 1 à 50 pour cent en poids de charbon actif, par rapport à la quantité de phosphore purifié retirée par heure du lit fixe de charbon actif dans l'étape b).

4. Procédé selon au moins l'une des revendications 1 à 3, **caractérisé en ce que** le lit fixe de charbon actif contient un ou plusieurs adsorbants de la série des zéolithes, des argiles, des diatomites, des gels de silice, des terres décolorantes, des perlites, des silicates de magnésium, des particules de verre et des polymères organiques en une quantité de 0,1 à 20 pour cent en poids, préférablement de 0,5 à 10 pour cent en poids par rapport au charbon actif.

5. Procédé selon au moins l'une des revendications 1 à 4, **caractérisé en ce qu'**il est mis en œuvre à une température dans la plage de 45 à 120 °C, de préférence dans la plage de 45 à 95 °C.

6. Procédé selon au moins l'une des revendications 1 à 5, **caractérisé en ce qu'**il est mis en œuvre à une pression dans la plage de 0,1 à 3,0 bars.

7. Procédé selon au moins l'une des revendications 1 à 6, **caractérisé en ce que** le phosphore impur liquide est conduit à travers le lit fixe de charbon actif avec un débit volumique qui permet un temps de séjour moyen du phosphore dans le lit fixe de charbon actif de 1 à 600 minutes, de préférence de 1 à 300 minutes et particulièrement préférablement de 2 à 100 minutes, le temps de séjour moyen correspondant au quotient du volume du lit fixe et du débit volumique sortant.

8. Procédé selon au moins l'une des revendications 1 à 7, **caractérisé en ce que** les étapes a) et b) sont mises en œuvre dans au moins un récipient, de préférence de conception cylindrique, qui est de préférence pourvu d'au moins un emplacement d'entrée pour le phosphore impur liquide, d'au moins une zone d'adsorption pour la réception d'au moins un lit fixe de charbon actif, d'au moins un fond perforé pour la fixation d'au moins un lit fixe de charbon actif et d'au moins un emplacement de sortie, pour le phosphore purifié, spatialement éloigné de l'emplacement d'entrée.

9. Procédé selon au moins l'une des revendications 1 à 9, **caractérisé en ce que** dans l'étape a) le phosphore impur liquide est divisé en deux flux partiels ou plus et chaque flux partiel est mis en contact avec au moins un lit fixe de charbon actif qui se trouve de préférence à chaque fois dans un récipient distinct.

10. Procédé selon au moins l'une des revendications 1 à 9, **caractérisé en ce que** le phosphore impur liquide dans l'étape a) est divisé en deux flux partiels ou plus et pour chaque flux partiel, les étapes a) et b) sont mises en œuvre avec un lit fixe de charbon actif distinct, qui se trouve de préférence dans un récipient distinct, le nombre de flux partiels et le nombre de lits fixes de charbon actif étant choisis de telle sorte que toujours au moins un lit fixe de charbon actif est utilisé pour la mise en œuvre des étapes a) et b) et le charbon actif est régénéré ou échangé au moins dans un lit fixe de charbon actif.

11. Procédé selon au moins l'une des revendications 1 à 10, **caractérisé en ce qu'**à la suite des étapes a) et b)
c) le lit fixe de charbon actif est mis en contact avec de l'eau chaude ou de la vapeur d'eau,
d) de l'eau et du phosphore sont retirés du lit fixe de charbon actif après l'étape c),
e) le charbon actif utilisé est régénéré dans le lit fixe de charbon actif ou remplacé par du charbon actif frais, et
f) le phosphore retiré dans l'étape d) est renvoyé à nouveau dans l'étape a).

12. Procédé selon les revendications 10 et 11, **caractérisé en ce que** le phosphore impur liquide dans l'étape a) est divisé en deux flux partiels ou plus et pour chaque flux partiel, les étapes a) et b) sont mises en œuvre avec un lit fixe de charbon actif distinct, qui se trouve de préférence dans un récipient distinct, le nombre de flux partiels et le nombre de lits fixes de charbon actif étant choisis de telle sorte que toujours au moins un lit fixe de charbon actif est utilisé pour la mise en œuvre des étapes a) et b) et la mise en œuvre des étapes c) à f) est réalisée dans au moins un lit fixe de charbon actif.

13. Procédé selon les revendications 10 et 11, **caractérisé en ce que** dans l'étape c), de l'eau liquide dotée d'une température de 45 à 160 °C ou de la vapeur d'eau dotée d'une température de 100 à 240 °C est utilisée.
